# EUROPEAN PATENT SPECIFICATION

(11) **EP 1 322 153 B1**
(45) Date of publication and mention of the grant of the patent: **04.05.2005**
(21) Application number: 01963164.7
(22) Date of filing: 30.08.2001
(51) Int. Cl.: A01K 97/12, A01K 87/00

(54) **BITE ALARM FOR FISHING**
BISSANZEIGER ZUM ANGELN
DETECTEUR DE TOUCHES POUR LA PECHE

(30) Priority: 08.09.2000 GB 0022038
(43) Date of publication of application: 02.07.2003
(73) Proprietor: TNA Designs Limited, Cardiff CF10 2DX (GB)
(72) Inventor: Allen, Timothy, Bolnhurst, Bedfordshire MK44 2ES (GB)
(74) Representative: Bennett, Adrian Robert J.
(86) International application number: PCT/GB2001/003873
(87) International publication number: WO 2002/019816

(56) References cited:
- EP-A- 0 463 185
- EP-A- 0 749 687
- DE-A- 2 801 625
- FR-A- 2 742 967
- US-A- 2 927 995

## Description

This invention relates to visible bite alarms for use with fishing rods.

Electrically-operated bite alarms are available, for connection on to a fishing rod stand. In one example, a bite alarm has a U-shaped opening for receiving the rod, and a narrower, deeper opening for receiving the fishing line which extends along the rod. The fishing line moves in the nip of a pair of rollers. A bite from a fish pulls on the line and moves the rollers which in turn triggers an electronic circuit to produce a bite alarm, usually an audible noise and a visible light. These devices are useful for day or night fishing, but for night fishing they give insufficient information about the nature and timing of the bite. A fisherman would not know the strength of the bite, and would find it difficult to judge when to jerk the fishing rod to secure the hook in the fish.

For night fishing, lights powered from chemicals are available to clip on the end of the fishing rod remote from the handle, so that the fisherman can follow any motion of the rod, to give him the information he needs about the strength and timing of the bite. However, the lights of necessity remain alight all the time, and this is uncomfortable for the fisherman. They are also expensive and have a relatively short life span.

Attempts to provide electrical illumination at the remote end of the rod have, up until now, failed in all practical senses. The present invention solves the problem by providing apparatus adapted for connection close to the end of a fishing rod remote from the rod handle, comprising an antenna for receiving electromagnetic radiation from the said rod end and converting it to an electrical signal; and an electric light for generating visible light from the electrical signal.

This invention requires the fishing rod to provide the necessary electromagnetic radiation, and accordingly a related invention provides an electric bite alarm for connection to a fishing rod, responsive to the movement of a fishing line extending along the rod to trigger a bite signal, comprising an electromagnetic signal generator triggered by the bite signal to transmit an electromagnetic signal into the rod.

Both these inventions would be supplied for use by a fisherman, for example as a bite alarm kit. Thus the invention also provides a bite alarm kit for a fishing rod, comprising apparatus as defined above for generating visible light, and an electric bite alarm as defined above for transmitting an electromagnetic signal into a fishing rod, such that the transmitted electromagnetic signal may be received, in use, by the antenna to cause visible light to be generated from close to the end of the fishing rod in response to the bite signal.

Further, the invention provides a fishing kit comprising a bite alarm kit as defined above and a fishing rod whose interior at least is electrically conductive.

Preferably, the antenna comprises a coil and the coil is connected to the electric light, which may for example be a light-emitting diode. In a preferred embodiment of the invention, the antenna is responsive to microwave radiation. The antenna preferably has a half-wave rectifier in series with the light-emitting diode and this rectifier could be another diode.

In the preferred example, the coil is connected at one end to an elongate conductor, such as a metal wire, extending generally parallel to the coil axis and spaced from the coil. The coil may for example be a metal coil spring.

Preferably, the apparatus comprises a housing, for example made from a plastics moulding, for the antenna and the light, with means for fixing the housing to the rod in use. In this case, the elongate conductor should preferably be exposed outside the housing for abutting the surface of the rod in use.

The apparatus requires no power supply, and no wires extending along the fishing rod. It is preferably powered solely by the electromagnetic radiation emitted by the rod.

The electric bite alarm for connection to the fishing rod preferably generates radiation at microwave frequencies, and preferably has its own power supply, for example a battery compartment. As with conventional bite alarms, it may also provide an audible alarm, preferably with a volume control, and it may also provide a visual alarm. Again, as with conventional bite alarms, it preferably has a housing, mountable on a rod stand, in which housing the rod can rest in use.

The fishing rod, with its electrically conductive core, is preferably of carbon fibre, and this is preferably wound helically along the rod.

In order that the inventions may be better understood, a preferred embodiment will now be described, by way of example only, with reference to the accompanying diagrammatic drawings in which:
Figure 1 is a perspective view of part of a fishing rod resting on a stand incorporating a bite alarm, incorporating embodiments of the inventions;
Figure 2a is an end view, and Figure 2b is a side view, greatly enlarged, of bite alarm apparatus embodying the invention and connected to the end of the rod remote from the handle, as shown in Figure 1; and
Figure 3 is an enlarged side view of an electric bite alarm embodying the invention, for supporting a fishing rod and line as shown in Figure 1.

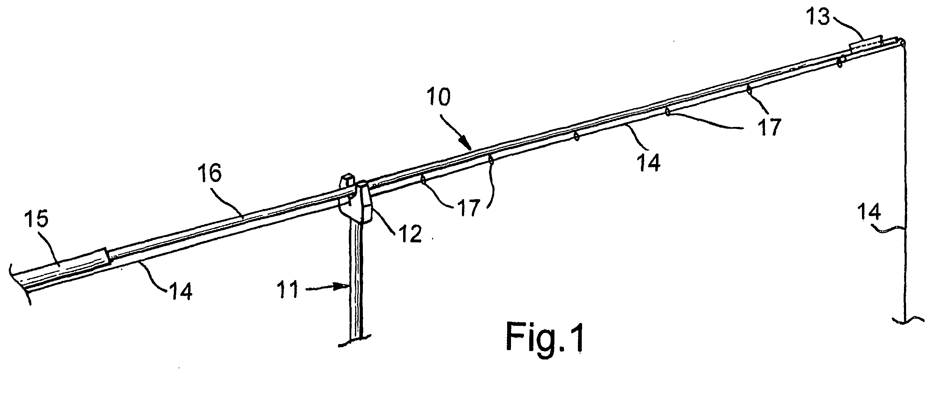

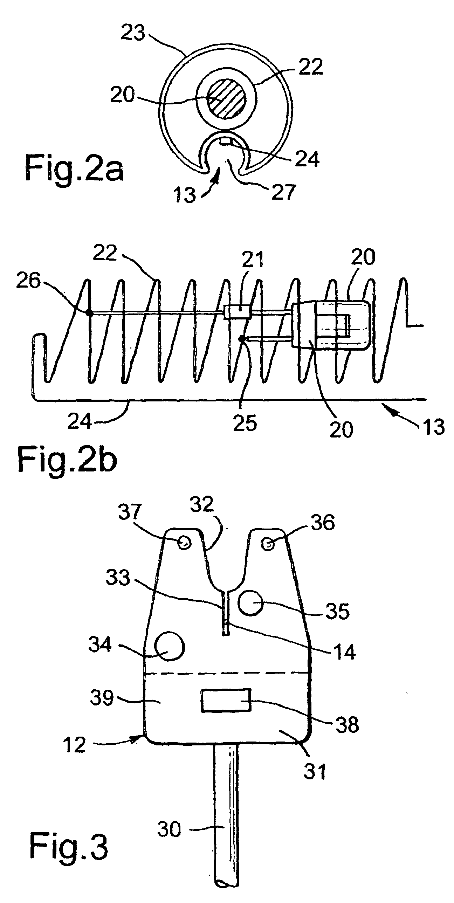

With reference to Figure 1, a conventional fishing rod 16 has a carbon fibre core, with the carbon fibre wound helically along the axis, and coated with a plastics varnish. The rod has a handle 15 at one end, and a row of eyelets 17 guiding a fishing line 14 along the entire length of the rod to a spool (not shown) coupled to the handle 15. An electric bite alarm 12, described below in greater detail with reference to Figure 3, rests in a conventional fishing rod stand 11 which supports the rod at a point along its length, with the handle 15 resting on the ground. A receiver unit 13 is clipped on to the far end of the rod 16, to act as a night light giving a clear visual signal to the fisherman when, and only when, there is a bite. The receiver unit 13 is described in greater detail below with reference to Figures 2a and 2b.

The receiver unit 13 has a hollow, generally cylindrical transparent plastics housing 23 which may be formed as a unitary moulding. The housing 23 has a part-cylindrical channel-shaped recess 27 whose walls are resiliently deformable, so that the housing can be clipped with a push fit over the narrow end of the fishing rod 16.

An antenna comprises a metal coil spring 22, for example of tin-copper, typically of 4 or 5mm diameter and 1-2cm long, connected at one end to an elongate metal wire 24 extending generally parallel to the axis of the coil 22 and spaced from it. The coil 22 is housed within the housing 23, but the elongate wire 24 is exposed outside the housing, within the channel-shaped recess 27, for abutment against the varnished surface of the rod 16.

A light-emitting diode 20 is positioned within the coil spring 22 and is connected at one terminal to the coil spring 22 at a point 25 approximately at the middle of the spring. The other terminal is connected to a half-wave rectifying diode 21 whose other terminal is connected to the coil spring 22 at a point 26 near the end to which the elongate wire 24 is connected. Thus the light-emitting diode 20, the rectifying diode 21, and the antenna coil 22 are connected in series. The antenna is, in use, positioned parallel to the fishing rod 16 and close to its side, so that the antenna receives electromagnetic radiation from the rod. The alternating current generated in the antenna powers the light-emitting diode 20 which provides a visual bite alarm signal which can be seen from a distance of at least several yards by the fisherman who may have left the rod unattended. When a fish bites, the end of the fishing rod vibrates in a way which characterises the strength and timing of the bite, and the fisherman can observe all of this by following the motion of the light-emitting diode 20.

It is believed that the receiver unit 13 constitutes a tuned circuit; the frequency response of which matches the frequency band of the signal generator 35. A broad bandwidth is preferred.

The electric bite alarm 12, shown in Figure 3, has a plastics housing 31 and a stem 30 for mounting in the fishing rod stand 11 (Figure 1). The housing 31 has a U-shaped recess 32 for accommodating the fishing rod 16, and a deeper, narrower recess 33 for accommodating the fishing line 14. The housing has a battery compartment 39 for accommodating standard cells and powering the electrical components. A control circuit (not shown) responds to movements of rollers (not shown) in the nip of which the fishing line 14 runs as it passes through the deeper recess 33. The sensitivity of the roller arrangement and the associated electrical trigger mechanism is adjustable by a potentiometer (not shown). When triggered by the movement of the fishing line 14, the control circuit generates a bite alarm signal and activates an audible alarm at 38, whose volume can be controlled by a potentiometer 34, as well as light-emitting diodes 36 and 37 which may be of different colours. The novel part of the bite alarm 12 is the microwave signal generator 35 within the housing, closely adjacent the fishing rod in use. The bite alarm triggers the activation of the signal generator 35, which transmits the electromagnetic radiation at microwave frequencies into the fishing rod. This transmission continues for as long as there is a bite detected. It is received by the receiver unit 13, as described above.

We have found that the fishing rod transmits the microwave signal satisfactorily from one end of the rod to the other, and it is believed that this is by the conduction of alternating frequency electrical signals along the carbon fibres; it appears to be assisted by the helically-wound structure of the carbon fibres along the rod. It is also believed that the fishing rod then acts as a transmitting antenna, to generate the microwave transmission which is received by the coil spring 22. It is a significant advantage of this arrangement that no wires need to be incorporated in the fishing rod, which usually comes in separate inter-fitting sections: a standard conventional fishing rod will work satisfactorily.

By triggering the control circuit only when there is a bite, power consumption by the electric bite alarm 12 is very low. In alternative examples, the lights 36 and 37 are omitted, as they are considered redundant, and it would also be possible to omit the audible alarm 38 in order to save further power consumption.

It will be appreciated that there are many alternative ways of putting these inventions into effect. Any form of transducer for converting electrical power transmitted along the rod into power for a visual indicator could be used in place of the receiver unit 13 described above. Frequencies other than microwave frequencies might also work satisfactorily, although we have found that microwave frequencies are particularly convenient. The microwave signal generator 35 is conveniently of the same type as is found in mobile telephones, and it can be provided inexpensively.

## Claims

1. Apparatus adapted for connection close to the end of a fishing rod remote from the rod handle, comprising an antenna for receiving electromagnetic radiation from the said rod end and converting it to an electrical signal; and an electric light for generating visible light from the electrical signal.

2. Apparatus according to Claim 1, in which the antenna comprises a coil and the coil is connected to the electric light.

3. Apparatus according to Claim 1, in which the electric light is a light-emitting diode.

4. Apparatus according to Claim 3, comprising a half-wave rectifier connected in series with the light-emitting diode.

5. Apparatus according to Claim 4, in which the half-wave rectifier is a diode.

6. Apparatus according to Claim 2, in which the coil is connected at one end to an elongate conductor extending generally parallel to the coil axis and spaced from the coil.

7. Apparatus according to Claim 1, comprising a housing for the antenna and the light, the housing including a formation for clamping the apparatus to the rod in use.

8. Apparatus according to Claim 6, comprising a housing for the antenna and the light, the housing including a formation for clamping the apparatus to the rod in use, in which the elongate conductor is exposed outside the housing for abutting against the surface of the rod in use.

9. Apparatus according to Claim 2, in which the coil is a metal coil spring.

10. Apparatus according to Claim 1, electrically powered solely by the electromagnetic radiation.

11. Apparatus according to Claim 1, responsive to electromagnetic radiation at microwave frequencies.

12. An electric bite alarm for connection to a fishing rod, responsive to the movement of a fishing line extending along the rod to trigger a bite signal, comprising an electromagnetic signal generator triggered by the bite signal to transmit an electromagnetic signal into the rod.

13. An electric bite alarm according to Claim 12, in which the electromagnetic signal generator generates radiation at microwave frequencies.

14. An electric bite alarm according to Claim 12, comprising an electric power supply for the electromagnetic signal generator.

15. An electric bite alarm according to Claim 12, further comprising an audible alarm triggered by the bite signal.

16. An electric bite alarm according to Claim 12, further comprising a visible alarm triggered by the bite signal.

17. An electric bite alarm according to Claim 12, comprising a housing mountable on a stand, in which housing the rod rests in use.

18. A bite alarm kit for a fishing rod, comprising apparatus according to Claim 1 for generating visible light, and an electric bite alarm according to Claim 12 for transmitting an electromagnetic signal into a fishing rod, such that the transmitted electromagnetic signal may be received, in use, by the antenna to cause visible light to be generated from close to the end of the fishing rod in response to the bite signal.

19. A fishing kit comprising a bite alarm kit according to Claim 18 and a fishing rod whose interior at least is electrically conductive.

20. A fishing kit according to Claim 19, in which the fishing rod comprises at least a core of carbon fibre.

21. A fishing kit according to Claim 20, in which the carbon fibre is wound helically along the rod.

## Patentansprüche

1. Vorrichtung zum Anschließen in der Nähe des Endes einer Angelrute fern vom Rutengriff, umfassend eine Antenne zum Empfangen von elektromagnetischer Strahlung von dem genannten Rutenende und zum Umwandeln derselben in ein elektrisches Signal; und eine elektrische Lampe zum Erzeugen von sichtbarem Licht von dem elektrischen Signal.

2. Vorrichtung nach Anspruch 1, wobei die Antenne eine Spule umfasst und die Spule mit der elektrischen Lampe verbunden ist.

3. Vorrichtung nach Anspruch 1, wobei die elektrische Lampe eine Leuchtdiode ist.

4. Vorrichtung nach Anspruch 3, umfassend einen Halbwellengleichrichter, der in Serie mit der Leuchtdiode geschaltet ist.

5. Vorrichtung nach Anspruch 4, wobei der Halbwellengleichrichter eine Diode ist.

6. Vorrichtung nach Anspruch 2, wobei die Spule an einem Ende mit einem länglichen Leiter verbunden ist, der allgemein parallel zur Spulenachse und in einem Abstand von der Spule verläuft.

7. Vorrichtung nach Anspruch 1, umfassend ein Gehäuse für die Antenne und die Lampe, wobei das Gehäuse eine Formation zum Befestigen der Vorrichtung an der Rute beim Gebrauch aufweist.

8. Vorrichtung nach Anspruch 6, umfassend ein Gehäuse für die Antenne und die Lampe, wobei das Gehäuse eine Formation zum Befestigen der Vorrichtung an der Rute beim Gebrauch aufweist, wobei der längliche Leiter außerhalb des Gehäuses freiliegt und beim Gebrauch an der Oberfläche der Rute anliegt.

9. Vorrichtung nach Anspruch 2, wobei die Spule eine Schraubenfeder aus Metall ist.

10. Vorrichtung nach Anspruch 1, die nur durch die elektromagnetische Strahlung elektrisch gespeist wird.

11. Vorrichtung nach Anspruch 1, die auf elektromagnetische Strahlung auf Mikrowellenfrequenzen anspricht.

12. Elektrischer Anbissalarm zum Anschließen an eine Angelrute, der auf die Bewegung einer Angelleine anspricht, die zum Auslösen eines Anbisssignals entlang der Rute verläuft, umfassend einen elektromagnetischen Signalgenerator, der durch das Anbisssignal ausgelöst wird, um ein elektromagnetisches Signal in die Rute zu senden.

13. Elektrischer Anbissalarm nach Anspruch 12, bei dem der elektromagnetische Signalgenerator Strahlung auf Mikrowellenfrequenzen erzeugt.

14. Elektrischer Anbissalarm nach Anspruch 12, umfassend eine Stromversorgung für den elektromagnetischen Signalgenerator.

15. Elektrischer Anbissalarm nach Anspruch 12, ferner umfassend einen durch das Anbisssignal ausgelösten hörbaren Alarm.

16. Elektrischer Anbissalarm nach Anspruch 12, ferner umfassend einen durch das Anbisssignal ausgelösten sichtbaren Alarm.

17. Elektrischer Anbissalarm nach Anspruch 12, umfassend ein auf einem Ständer montierbares Gehäuse, in dem die Rute beim Gebrauch ruht.

18. Anbissalarmkit für eine Angelrute, umfassend eine Vorrichtung nach Anspruch 1 zum Erzeugen von sichtbarem Licht und einen elektrischen Anbissalarm nach Anspruch 12 zum Senden eines elektromagnetischen Signals in eine Angelrute, so dass das gesendete elektromagnetische Signal beim Gebrauch von der Antenne empfangen werden kann, um zu bewirken, dass sichtbares Licht in der Nähe des Endes der Angelrute als Reaktion auf das Anbisssignal erzeugt wird.

19. Angelkit, umfassend ein Anbissalarmkit nach Anspruch 18 und eine Angelrute, bei der wenigstens das Innere elektrisch leitend ist.

20. Angelkit nach Anspruch 19, bei dem die Angelrute wenigstens einen Kohlenstofffaserkern umfasst.

21. Angelkit nach Anspruch 20, bei dem die Kohlenstofffaser schraubenförmig entlang der Rute gewunden ist.

## Revendications

1. Appareil adapté pour être connecté à un point proche de l'extrémité d'une canne à pêche éloignée du manchon de la canne à pêche, l'appareil comprenant une antenne destinée à recevoir un rayonnement magnétique émis par ladite extrémité de la canne à pêche et à le convertir en un signal électrique ; et une source de lumière électrique qui génère une lumière visible à partir du signal électrique.

2. Appareil selon la Revendication 1, dans lequel l'antenne comprend une bobine, et la bobine est connectée à la source de lumière électrique.

3. Appareil selon la Revendication 1, dans lequel la source de lumière électrique est une diode électroluminescente.

4. Appareil selon la Revendication 3, qui comprend un redresseur à une alternance connecté en série avec la diode électroluminescente.

5. Appareil selon la Revendication 4, dans lequel le redresseur à une alternance est une diode.

6. Appareil selon la Revendication 2, dans lequel une extrémité de la bobine est connectée à un conducteur allongé qui s'étend généralement parallèlement à l'axe de la bobine et qui est écarté de la bobine.

7. Appareil selon la Revendication 1, qui comprend un logement pour l'antenne et la source de lumière, le logement comprenant une structure destinée à fixer en serrant l'appareil sur la canne à pêche pendant l'emploi.

8. Appareil selon la Revendication 6, qui comprend un logement pour l'antenne et la source de lumière, le logement comprenant une structure destinée à fixer en serrant l'appareil sur la canne à pêche pendant l'emploi, dans lequel le conducteur allongé est exposé hors du logement pour buter contre la surface de la canne à pêche pendant l'emploi.

9. Appareil selon la Revendication 2, dans lequel la bobine est un ressort à boudin en métal.

10. Appareil selon la Revendication 1, dont l'alimentation en électricité n'est fournie que par le rayonnement électromagnétique.

11. Appareil selon la Revendication 1, qui réagit aux rayonnements électromagnétiques dans la gamme des hyperfréquences.

12. Avertisseur électrique de touches destiné à être connecté à une canne à pêche, qui réagit au mouvement d'une ligne qui s'étend le long de la canne à pêche pour déclencher un signal de touche, comprenant un générateur de signaux électromagnétiques déclenché par le signal de touche pour transmettre un signal électromagnétique dans la canne à pêche.

13. Avertisseur électrique de touches selon la Revendication 12, dans lequel le générateur de signaux électromagnétiques génère un rayonnement dans la gamme des hyperfréquences.

14. Avertisseur électrique de touches selon la Revendication 12, qui comprend une alimentation en énergie électrique pour le générateur de signaux électromagnétiques.

15. Avertisseur électrique de touches selon la Revendication 12, qui comprend de plus un avertisseur sonore déclenché par le signal de touche.

16. Avertisseur électrique de touches selon la Revendication 12, qui comprend de plus un avertisseur visuel déclenché par le signal de touche.

17. Avertisseur électrique de touches selon la Revendication 12, qui comprend un logement pouvant être monté sur un support, logement dans lequel la canne à pêche repose pendant l'emploi.

18. Kit d'avertisseur de touches pour une canne à pêche selon la Revendication 1, pour générer une lumière visible, et un avertisseur électrique de touches selon la Revendication 12 pour transmettre un signal électromagnétique dans une canne à pêche, de sorte que le signal électromagnétique transmis puisse être reçu par l'antenne pendant l'emploi pour faire générer une lumière visible depuis un point proche de l'extrémité de la canne à pêche en réponse au signal de touche.

19. Kit de pêche comprenant un kit d'avertissement de touches selon la Revendication 18 et une canne à pêche dont au moins l'intérieur conduit l'électricité.

20. Kit de pêche selon la revendication 19, dans lequel la canne à pêche comprend au moins un noyau en fibre de carbone.

21. Kit de pêche selon la Revendication 20, dans lequel la fibre de carbone est enroulée de façon hélicoïdale le long de la canne à pêche.
